# EUROPÄISCHE PATENTSCHRIFT

(11) **EP 3 624 988 B1**
(45) Veröffentlichungstag und Bekanntmachung des Hinweises auf die Patenterteilung: **17.05.2023**
(21) Anmeldenummer: 19702591.9
(22) Anmeldetag: 30.01.2019
(51) Int. Cl.: B23Q 1/01, B23Q 1/62, B23Q 3/157, B23Q 1/44

(54) **WERKZEUGMASCHINE**
MACHINE-TOOL
MACHINE-OUTIL

(30) Priorität: 30.01.2018 DE 102018201419
(43) Veröffentlichungstag der Anmeldung: 25.03.2020
(73) Patentinhaber: DECKEL MAHO Pfronten GmbH, 87459 Pfronten (DE)
(72) Erfinder: JUNG, Robert, 87459 Pfronten (DE); GEISSLER, Alfred, 87459 Pfronten (DE); KIPKE, Stefan, 87471 Durach (DE)
(74) Vertreter: MERH-IP Matias Erny Reichl Hoffmann Patentanwälte PartG mbB
(86) Internationale Anmeldenummer: PCT/EP2019/052270
(87) Internationale Veröffentlichungsnummer: WO 2019/149761

(56) Entgegenhaltungen:
- EP-A1- 1 488 887
- EP-A1- 3 113 906
- EP-A2- 1 201 351
- DE-A1- 19 830 391
- DE-A1-102007 043 977
- JP-A- H02 279 249
- US-A1- 2012 245 005
- US-B1- 7 534 078

## Beschreibung

### Technisches Gebiet

Die vorliegende Erfindung betrifft eine Werkzeugmaschine zur Werkstückbearbeitung mit einer Arbeitsspindel mit Pinole mittels 5-Achsen und den Aufbau einer Werkzeugmaschine zur 5-Achsenbearbeitung mit einer an einem Maschinenständer in drei Bewegungsrichtungen, insbesondere über einem Spänekanal verfahrbaren Arbeitsspindel.

### Hintergrund der Erfindung

Aus dem Stand der Technik sind verschiedene Bohr-, Fräs- und/oder Drehmaschinen bekannt, deren Arbeitsspindel über eine Pinole verfügt. Grundsätzlich handelt es sich bei einer Pinole um eine hohl gebohrte Arbeitsspindel in stationären Werkzeugmaschinen, die eine axiale Bewegung ausführen kann. Dabei wird in spanenden Maschinen mit rotierendem Werkzeug, wie Bohrmaschinen, Bohrwerken oder Fräsmaschinen zur Übertragung des Drehmoments auf das Werkzeug sowie des Werkzeugvorschubs eine Hohlwelle, die Arbeitsspindel verwendet. Zur Aufnahme verschiedener Werkzeuge ist sie an einem Ende aufgebohrt. Bei der als Pinole ausgeführten Arbeitsspindel ist eine manuelle oder automatisierte, axiale Verschiebbarkeit der Spindel gegenüber dem Support oder dem Spindelträger vorgesehen. Diese Pinolenachse (meist als w-Achse bezeichnet) kann sowohl als Positionierachse, d. h. die Position wird im Voraus für die folgende Maschinenoperation fest eingestellt, als auch als Vorschubachse, d. h. die Position wird während der Bearbeitungsoperation als Vorschubbewegung verändert, ausgeführt sein. Im Gegensatz zum Querschieber werden dabei nur die rotierenden Teile der Spindel axial verschoben, während der Support oder Spindelkasten feststeht. Die Pinole ist hierzu mehrfach, meist in Wälzlagern, zur Aufnahme der radialen und axialen Kräfte gelagert, jedoch zur Realisierung der Verstellbewegung in axialer Richtung gegenüber dem Gehäuse verschiebbar. Zur Übertragung der Drehbewegung und des Drehmoments ist die Pinole zumeist über Zahnräder, Riemenscheiben, Kupplungen etc. oder andere geeignete Elemente mit dem Getriebe verbunden. Bei Drehmaschinen wird die Spindel des Reitstocks häufig auch als Pinole bezeichnet.

Aus der DE 10 2009 058 649 A1 ist beispielsweise eine Bohr- und Fräsmaschine mit Frässchlitten bekannt, die mit einem zusätzlichen Drehwerkzeugschlitten versehen ist. Hierzu ist an einem Frässchlittenträger, der an einem Ständer montiert ist, ein Horizontalfrässchlitten vorgesehen, der horizontal verfährt. Auf dem Horizontalfrässchlitten verfährt darüber hinaus horizontal ein Drehwerkzeugschlitten, der eine entsprechende Drehwerkzeugaufnahme trägt. Die beiden Schlitten sind getrennt verfahrbar ausgeführt.

Die DE 10 2006 007 737 A1 zeigt eine Bohrspindel für ein Vertikalbearbeitungszentrum mit hohler Arbeitsspindel. Die Werkzeugspindel ist in einem Spindelschlitten aufgenommen, der relativ zu einem Vertikalschlitten horizontal ein- und ausfahrbar ist. Die Spindel selbst ist ebenfalls in horizontaler Richtung relativ zum Spindelschlitten bewegbar. Der Spindelschlitten selbst ist in einem Vertikalschlitten gelagert und durchsetzt diesen. Er kann dabei in horizontaler Richtung durch den Vertikalschlitten hindurch verfahren werden.

Wie eingangs angesprochen, beschäftigt sich die Erfindung auch mit dem grundsätzlichen Aufbau einer in drei Richtungen verfahrbaren Arbeitsspindel in Bezug auf einen Spänesammelraum sowie ein diesbezügliches Maschinenaufbaukonzept.

Hierzu offenbart beispielsweise die EP 176233 A2 ein Maschinenkonzept, bei dem auf einem Bett zwei Maschinenständer angeordnet sind, die über eine Brücke miteinander verbunden sind. Auf den beiden miteinander verbundenen Maschinenständern ist in vertikaler Richtung ein rechteckiger Rahmen angeordnet, der vertikal und horizontal verfahrbar ist. Innerhalb dieses ersten Rahmens ist ein zweiter Rahmen mit einer Arbeitsspindel vorgesehen, die in vertikaler Richtung zu den beiden Rahmen verfahren werden kann. Unterhalb der Rahmenanordnungen ist in dem Maschinenbett ein Spänekanal angeordnet, dessen Längsachse sich parallel zur Spindelachse erstreckt.

Ein ähnliches Maschinenkonzept, bei dem eine in drei Raumrichtungen verfahrbare Arbeitsspindel über einem Spänekanal angeordnet ist, wird in der EP 2 865 485 B1 beschrieben. Bei diesem Konzept sind an einem Maschinenbett beidseitig Maschinenständer angebracht, die über eine gabelförmige Brücke miteinander verbunden sind. Auf dieser Brücke ist ein Spindelstock auf Führungen gelagert, der in horizontaler Richtung und zusätzlich in Richtung der Spindelachse senkrecht hierzu verfahrbar ist.

Die US 7,534,078 B1 zeigt ein weiteres Maschinenkonzept zur 3-Achsenbearbeitung eines Werkstücks, wobei die Arbeitsspindel in zwei Raumrichtungen und das Werkstück selbst in einer dritten Raumrichtung gegenüber dem Maschinenbett verfahren werden kann. Die Arbeitsspindel ist auf einem vertikal verfahrbarem Träger angeordnet und kann entlang ihrer Spindelachse horizontal in Richtung des zu bearbeitenden Werkstücks verfahren werden.

Die DE 10 2007 043 977 A1, die die Grundlage für den Oberbegriff von Anspruch 1 bildet, zeigt ein weiteres Maschinenkonzept zur 5-Achsenbearbeitung mit einem Schwenktisch sowie einer in drei Raumrichtungen verfahrbaren Arbeitsspindel. Auf einem parallel zur Schwenkachse des Schwenktisches verfahrbarem Horizontalschlitten ist eine Ständerkonstruktion mit Arbeitsspindel montiert, die in Richtung der Spindelachse der Arbeitsspindel horizontal auf das Werkstück verfahren werden kann. Die Arbeitsspindel kann dabei auf der Ständerkonstruktion in vertikaler Richtung verfahren werden.

### Zusammenfassung der Erfindung

Aufgabe der Erfindung ist es, ein Maschinenkonzept zur 5-Achsenbearbeitung anzugeben, das insbesondere gegenüber den oben beschriebenen bekannten Konzepten in einem oder mehreren der folgenden Punkte verbessert ist: Verfahrwege der Arbeitsspindel, Steifigkeit des Spindelträgers, Positionierbarkeit des Werkzeugs zum Werkstück/Maschinentisch und im Hinblick auf die Spanabfuhr.

Diese Aufgabe bzw. Teilaspekte hiervon werden durch ein Maschinenkonzept gelöst, wie es in dem unabhängigen Patentanspruch 1 beschrieben ist.

Eine erfindungsgemäße Werkzeugmaschine zur 5-Achsenbearbeitung umfasst ein Maschinenbett und einen Maschinenständer. Der Maschinenständer ist dabei auf der Oberseite des Maschinenbetts oder seitlich am Maschinenbett angeordnet und umfasst zwei stationäre Maschinenständerkörper, die über eine Brücke miteinander verbunden sind. Am Maschinenständer ist eine horizontal angeordnete Arbeitsspindel montiert, die in einer ersten, zweiten und einer dritten Bewegungsrichtung verfahrbar ist. Mit anderen Worten kann bei der erfindungsgemäßen Werkzeugmaschine die am Maschinenständer montierte Arbeitsspindel in drei Raumrichtungen verfahren werden. Die Arbeitsspindel ist dabei als in der ersten Bewegungsrichtung axial verfahrbare Pinole ausgebildet. Auf der Oberseite des Maschinenbetts ist ein Schwenktisch angeordnet, dessen Schwenkachse senkrecht zur Längsachse der Arbeitsspindel verläuft, wodurch eine effiziente Fünf-Achsenbearbeitung eines Werkstückes erfolgen kann. Die Brücke ist ausgeführt, die Pinole derart zu tragen, dass diese horizontal und parallel zum Maschinenbett in der zweiten Bewegungsrichtung zwischen den Maschinenständerkörpern senkrecht zu der ersten Bewegungsrichtung verfahrbar angeordnet ist. An den beiden Maschinenständerkörper sind Führungsschienen montiert, in denen auf beiden Seiten Vertikalschlitten an den Maschinenständerkörpern geführt sind und die Brücke durch die Vertikalschlitten in der dritten Bewegungsrichtung senkrecht zu der ersten und der zweiten Bewegungsrichtung verfahrbar ist.

Die erfindungsgemäße Werkzeugmaschine ist damit als Horizontalbearbeitungszentrum ausgebildet, d. h. die Arbeitsspindel ist parallel zur Oberfläche des Maschinentischs angeordnet und verfährt in horizontaler Richtung.

Die Pinole kann ein Pinolengehäuse umfassen, das entlang von Führungsschienen, die an dem Maschinenständer montiert sind, in der ersten Bewegungsrichtung axial in Bezug auf die Arbeitsspindel verfahren werden kann. Die das Werkzeug tragende Arbeitsspindel kann dabei zusätzlich in das Pinolengehäuse ebenfalls in der ersten Bewegungsrichtung ein- und ausfahrbar sein.

Das Verfahren der Arbeitsspindel in der ersten Bewegungsrichtung, die auf der Richtung der Schwenkachse senkrecht steht, erfolgt durch die Arbeitsspindel mit Pinole. Dabei handelt es sich um eine Arbeitsspindel mit Pinole, bei der eine sozusagen "doppelte" Verfahrbarkeit durch Verfahren des Pinolengehäuses mit einem Spindelstock auf einem Schlitten und zusätzlich der Arbeitsspindel in das Pinolengehäuse gegeben sein kann, oder auch um eine einfache Pinolenkonstruktion mit "einfacher" Verfahrbarkeit der Arbeitsspindel axial in der ersten Bewegungsrichtung.

Zur Verfahrbarkeit der Pinole auf der Brücke in der zweiten Bewegungsrichtung können auf der Brücke zweckmäßigerweise zwei horizontale Führungsschienen vorgesehen sein, mit denen die Pinole in horizontaler Richtung mit entsprechend hoher Steifigkeit in einem verhältnismäßig breiten Bereich über die gesamte Brücke verfahren werden kann.

Durch die Anordnung der Schwenkachse senkrecht zu der Längsachse der verfahrbaren Arbeitsspindel wird eine optimale Positionierbarkeit des Werkstücks in Bezug auf das in der Arbeitsspindel gespannten Werkzeugs im Rahmen der Fünf-Achs-Bearbeitung realisiert. Dies ist dadurch zu erklären, dass aufgrund der Schwenkbewegung des Schwenktisches zumindest in gewissen Grenzen eine weitere Positionierbarkeit des auf dem Schwenktisch gespannten Werkstücks in eben dieser ersten Bewegungsrichtung vorgenommen werden kann. In Summe ergeben sich folglich zwei Positioniermechanismen in dieser ersten Bewegungsrichtung, was eine erheblich effizientere Positionierung von Werkstück und Werkzeug zueinander ermöglicht.

Mittels der in den Führungsschienen geführten Vertikalschlitten kann die die Arbeitsspindel mit Pinole tragende Brücke vertikal in der dritten Bewegungsrichtung verfahren werden, wobei auch hier durch das Vorsehen einer doppelten Führung eine hohe Steifigkeit gewährleistet werden kann.

Derartige Ausführungen der Erfindung zeichnen sich mithin dadurch aus, dass sämtliche der drei zueinander rechtwinklig verlaufenden Bewegungsrichtungen eine Führung in Doppelschienen gewährleistet, sodass selbst bei hohen Verfahrwegen eine hohe Steifigkeit über den gesamten Verfahrbereich gewährleistet werden kann.

Gegenüber dem beispielsweise in der oben diskutierten DE 10 2006 007 737 A1 gezeigten Maschinenkonzept, bei dem ein horizontaler Spindelschlitten einen vertikalen Spindelschlitten durchsetzt, lässt sich auf diese Weise die Steifigkeit der Maschinenkonstruktion erheblich erhöhen.

Bei einem besonderes zweckmäßig ausgebildeten Ausführungsbeispiel der vorliegenden Erfindung sind in den drei bezeichneten (ersten, zweiten und dritten) Bewegungsrichtungen X, Y und Z jeweils vier Führungswagen zum Verfahren der Arbeitsspindel vorgesehen.

In einer besonders bevorzugten Ausführungsform resultiert durch die Positionierung der Arbeitsspindel mit Pinole zwischen zwei im Idealfall gleich ausgebildeten Maschinenständerkörpern ein im Wesentlichen thermosymmetrischer Aufbau des Maschinenkonzeptes, was für die Bearbeitung großdimensionierter Werkstücke von zentraler Bedeutung ist.

In einer besonders bevorzugten Ausführungsform ist oberhalb des Pinolengehäuses parallel zu der oben beschriebenen Brücke ein Verbindungselement angeordnet, wobei das Verbindungselement die beiden Maschinenständerkörper verbindet. Das Pinolengehäuse ist zwischen der Brücke und dem Verbindungselement auf der Brücke horizontal und parallel zu dem Maschinenbett in der zweiten Bewegungsrichtung zwischen den Maschinenständerkörpern verfahrbar. Aus dem Verbinden der beiden Maschinenständerkörper mittels des Verbindungselements resultiert ein besonders stabiler Aufbau der Werkzeugmaschine, wobei beim Verfahren des Pinolengehäuses entstehende Vibrationen reduziert und/oder vermieden werden können.

In einer besonders bevorzugten Ausführungsform verläuft im oder unterhalb des Maschinenbettes ein Spänesammelraum, dessen Achse parallel zur Pinolenachse angeordnet sein kann. Der Schwenktisch überspannt dabei den Spänekanal in dessen Breitenrichtung, so dass durch Verschwenken des Schwenktisches ein direkter Spanfall in den Spänesammelraum gewährleistet wird.

Vorzugsweise ist der Schwenktisch oberhalb eines im Maschinenbett vorgesehenen Spänesammelraums angeordnet, so dass abfallender Span über diesen Spänesammelraum mit Förderschnecke abgeführt werden kann.

Bevorzugt überspannt der Schwenktisch den Spänesammelraum in dessen Breite. Hieraus resultiert eine optimierte Abfuhr des entstehenden Spans durch Abfall von dem bearbeiteten Werkstück direkt in den Spänesammelraum bei Stellung des Schwenktisches in einer Schwenkposition.

In einer besonders bevorzugten Ausführungsform kann seitlich an dem Maschinenständer oder an einem der beiden Maschinenständerkörper bei sämtlichen hier beschriebenen Maschinenkonzepten ein Radmagazin vorgesehen sein, das über einen Manipulator ein Einwechseln von Werkzeugen in die Arbeitsspindel ermöglicht. Bei einer vorteilhaften Ausgestaltung ist dabei die Radachse des Radmagazins senkrecht zur ersten Bewegungsrichtung der Bewegung in axialer Richtung der Arbeitsspindel vorgesehen, so dass über einen Manipulator in einfacher Weise Werkzeuge in gleicher Richtung aus dem Radmagazin entnommen und in die Arbeitsspindel eingewechselt werden können.

In einer besonders bevorzugten Ausführungsform ist das Maschinengestell aufgrund des symmetrischen Aufbaus der Maschine mit einer Drei-Punkte-Lagerung aufgestellt.

Weitergehende Einzelheiten und Vorteile der vorliegenden Erfindung werden anhand der nachfolgenden Beschreibung von Ausführungsbeispielen der erfindungsgemäßen Werkzeugmaschine anhand der Zeichnungen deutlich.
- Figur 1: zeigt ein erstes Ausführungsbeispiel einer erfindungsgemäßen Werkzeugmaschine in perspektivischer Vorderansicht.
- Figur 2: zeigt ein Ausführungsbeispiel einer erfindungsgemäßen Werkzeugmaschine in perspektivischer Hinteransicht.
- Figur 3: zeigt ein Ausführungsbeispiel einer erfindungsgemäßen Werkzeugmaschine in Draufsicht.
- Figur 4: zeigt ein Ausführungsbeispiel einer erfindungsgemäßen Werkzeugmaschine in perspektivischer Seitenansicht.
- Figur 5a: zeigt ein Ausführungsbeispiel eines Schwenkrundtisches in einer Überkopfstellung einer erfindungsgemäßen Werkzeugmaschine in Seitenansicht.
- Figur 5b: zeigt ein Ausführungsbeispiel eines Schwenkrundtisches in einer Aufrechthaltung einer erfindungsgemäßen Werkzeugmaschine in Seitenansicht.
- Figur 6: zeigt ein Beispiel einer Werkzeugmaschine.
- Figur 7: zeigt ein weiteres Beispiel einer Werkzeugmaschine.
- Figur 8: zeigt ein weiteres Beispiel einer Werkzeugmaschine.
- Figur 9: zeigt ein weiteres Beispiel einer Werkzeugmaschine.
- Figur 10: zeigt ein weiteres Beispiel einer Werkzeugmaschine.
- Figur 11: zeigt ein Ausführungsbeispiel einer erfindungsgemäßen Werkzeugmaschine.

### Detaillierte Figurenbeschreibung

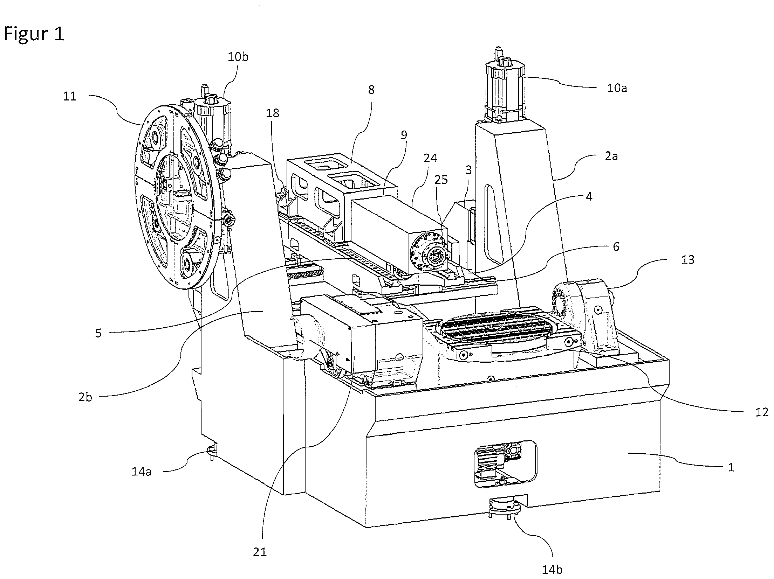

In Figur 1 ist ein erstes Ausführungsbeispiel einer Werkzeugmaschine in perspektivischer Vorderansicht dargestellt. Die Werkzeugmaschine umfasst ein Maschinenbett 1, das an der Unterseite durch drei Punktauflagen 14a, 14b, 14c feststeht. Durch die drei Punkteauflagen 14a, 14b, 14c kann die Werkzeugmaschine besonders standfest im Raum positioniert werden. Das Maschinenbett 1 hat eine viereckige Grundstruktur, bei der die Seiten in Längsrichtung länger als in der Breite sind.

Auf dem Maschinenbett 1 ist ein Maschinenständer 2 als zwei parallele gegenüberstehende Maschinenständerkörper 2a, 2b trapezförmig ausgebildet. Die Konstruktion der zwei Maschinenständerkörpern 2a, 2b auf dem Maschinenbett 2 ergibt eine besonders hohe Steifigkeit bei gleichzeitig kompaktem Aufbau der Werkzeugmaschine.

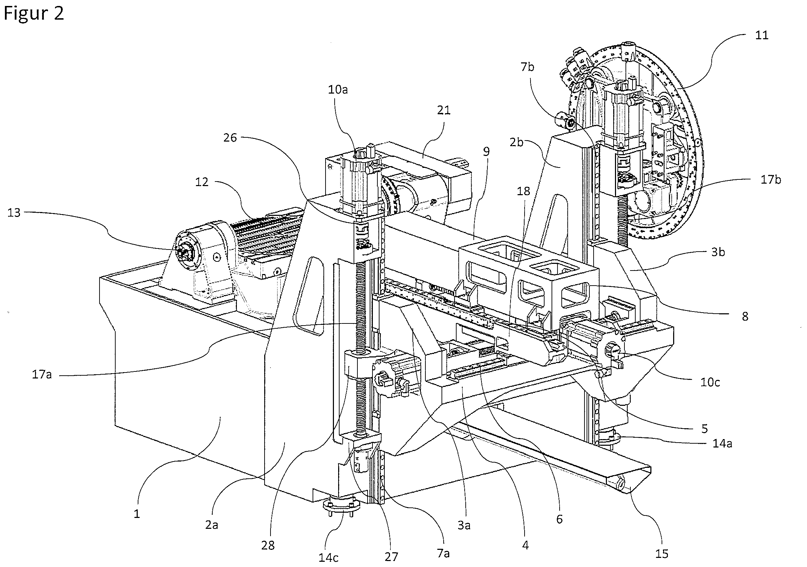

In Figur 2 ist die Werkzeugmaschine perspektivisch von der Hinterseite gezeigt. Auf den Maschinenständerkörpern 2a, 2b sind jeweils auf einer der Seitenflächen vertikale Führungsschienen 7a, 7b angeordnet In den Führungsschienen 7a, 7b wird in jeder Führungsschiene 7a, 7b ein Vertikalschlitten 3a, 3b geführt, der jeweils zwei Wagen besitzt, die in den Führungsschienen 7a, 7b eingesetzt sind. Die Vertikalschlitten 3a, 3b werden durch Kugelgewindetriebe 17a, 17b bewegt, wobei die Kugelgewindetriebe 17a, 17b vertikal von oben nach unten an einer Seitenfläche der Maschinenständerkörper 2a, 2b verlaufen und durch eine untere Halterung 27, eine mittlere Halterung 28 und eine obere Halterung 26 gelagert werden. Die untere Halterung 27, die mittlere Halterung 28 und die obere Halterung 26 befinden sich auf der jeweiligen Höhe der Maschinenständerkörper 2a, 2b. Auf der oberen Halterung 26 ist ein Antriebsmotor 10a, 10b des jeweiligen Kugelgewindetriebes 17a, 17b montiert. Anhand der Kugelgewindetriebe 17a, 17b lassen sich die Vertikalschlitten 3a, 3b präzise in vertikaler Richtung positionieren. Daher werden die Vertikalschlitten 3a, 3b parallel zueinander in vertikaler Richtung verfahren. Anstatt Kugelgewindetriebe 17a, 17b sind andere Antriebe für die Vertikalschlitten 3a, 3b möglich, wie zum Beispiel Linearmotoren.

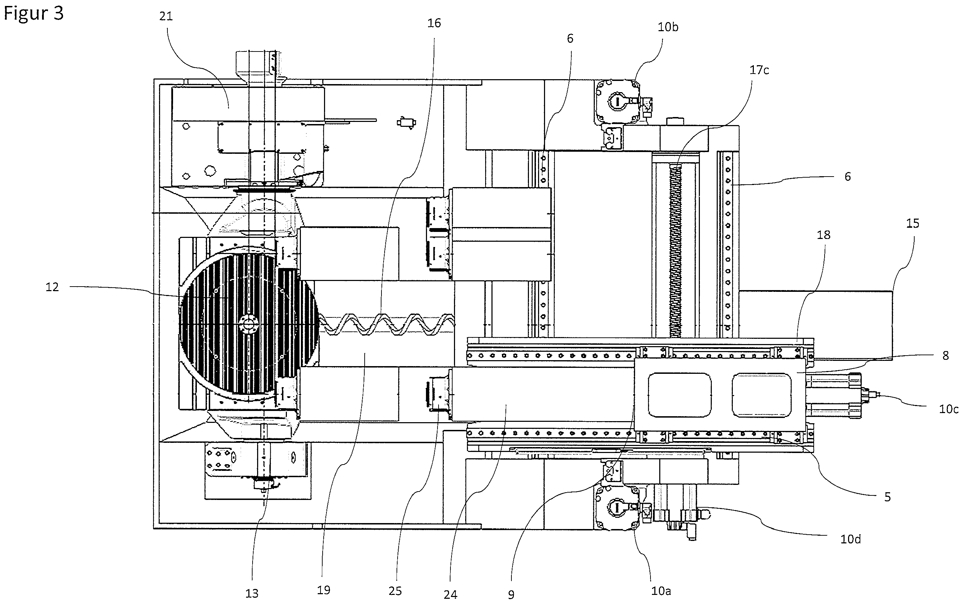

Zwischen den zwei Maschinenständerkörpern 2a, 2b ist eine Brücke 4 angeordnet, die durch die Vertikalschlitten 3a, 3b der jeweiligen Maschinenständerkörpern 2a, 2b in vertikaler Richtung verfahren wird. Die Brücke 4 ist eine kompakte Brückenkonstruktion, wobei auf der Brücke 4 zwischen den zwei Maschinenständerkörpern 2a, 2b zwei in horizontaler Richtung angeordnete parallel zueinander ausgerichtete Führungsschienen 6 angeordnet sind. Auf den Führungsschienen 6 ist ein Horizontalschlitten 18 angebracht, der zwischen den zwei Maschinenständerkörpern 2a, 2b durch ein in der Brücke 4 in einem Freiraum vorhandenen Kugelgewindetrieb 17c geführt wird (siehe Figur 3). Der Horizontalschlitten 18 ist auf vier Wagen angeordnet, die auf den Führungsschienen 6 geführt werden, wodurch der Horizontalschlitten 18 verfahren wird. Ein Antriebsmotor 10d ist an einer Außenseite der Brücke 4 angebracht, der die Leistung für die Bewegung des Horizontalschlittens 18 in horizontaler Richtung verrichtet.

Aus der Konstruktion der parallel zueinander ausgerichteten Maschinenständerkörpern 2a, 2b und der zwischen diesen in vertikaler Richtung verfahrbaren Brücke 4 resultiert ein thermosymmetrischer Aufbau. Die Konstruktion der Brücke 4 bringt eine große Steifigkeit bei einem kompakten Aufbau der Werkzeugmaschine mit sich. Durch den kompakten Aufbau der Werkzeugmaschine lässt sich z.B. auch eine Stahlabdeckung für die Werkzeugmaschine realisieren.

Auf dem Horizontalschlitten 18 sind zwei Führungsschienen 5 in horizontaler Ebene in Längsrichtung des Maschinenbettes 1 angebracht. Auf den Führungsschienen 5 wird ein Pinolengehäuse 8 in Längsrichtung des Maschinenbettes 1 geführt. Das Pinolengehäuse 8 ist kastenförmig mit einem Hohlraum konstruiert, wobei eine Pinole 9 mindestens teilweise von dem Pinolengehäuse 8 umschlossen wird und den Hohlraum mindestens teilweise füllt. Die Pinole 9 besteht aus einem Spindelstock 24 und einer Arbeitsspindel 25, wobei die Arbeitsspindel 25 aus und in den Spindelstock 24 verfahren werden kann. Das Pinolengehäuse 8 wird durch einen in dem Horizontalschlitten 18 angebrachten Kugelgewindetrieb 17d (nicht in den Figuren 1-5 gezeigt) in Längsrichtung des Maschinenbettes 1 in einer Pinolenachse verfahren, wobei auf der Unterseite des Pinolengehäuses 8 vier Wagen angeordnet sind, die auf den Führungsschienen 5 aufgelegt sind, wodurch das Pinolengehäuse 8 auf den Führungsschienen 5 verfahren werden kann. Ein Antriebsmotor 10c schließt sich an der Konstruktion des Horizontalschlittens 18 und einer Hinterseite des Pinolengehäuses 8 an. Durch das Verfahren des Pinolengehäuses 8 und dem Ein- und Ausfahren der Arbeitsspindel 25 wird die Arbeitsspindel 25 zweifach in Richtung der Pinolenachse verfahren, wodurch die Reichweite der Arbeitsspindel 25 in der Pinolenachse verlängert wird. Das Pinolengehäuse 8 verstärkt die Steifigkeit der Pinole 9, wobei die Beweglichkeit der Pinole 9 in Richtung der Pinolenachse ungestört ist und eine zielgenaue Arbeit der Arbeitsspindel 25 erreicht wird. Durch das Positionieren der Pinole 9 in einem Pinolengehäuse 8 auf dem Horizontalschlitten 18 auf der Brücke 4 ist die Werkzeugmaschine bei der Werkstückbearbeitung besonders stabil, wobei zugleich die Reichweite der Arbeitsspindel durch die Verfahrbarkeit verlängert ist. Aufgrund der Führungsschienen 7a, 7b auf den Maschinenständerkörpern 2a, 2b in vertikaler Richtung, den Führungsschienen 6 auf der Brücke 4 in horizontaler Richtung zwischen den Maschinenständerkörpern 2a, 2b und den Führungsschienen 5 auf dem Horizontalschlitten 18 in Längsrichtung des Maschinenbettes 1 in Richtung der Pinolenachse ist die Arbeitsspindel 25 in allen drei Raumrichtungen verfahrbar. Die Führungsschienen 5, 6, 7 treten jeweils doppelt auf, wodurch eine sichere und genauere Führung erzielt wird. Als Antrieb für das Verfahren des Horizontalschlitten 18 und des Pinolengehäuses 8 sind andere Antriebe als die Kugelgewindetriebe 17c, 17d möglich, wie zum Beispiel Linearmotoren.

Auf dem Maschinenbett 1 ist ein Schwenkrundtisch 12 angeordnet. Der Schwenkrundtisch ist durch zwei Schwenkarme 13 auf dem Maschinenbett 1 festmontiert. Ein Schwenkrundtischmotor 21 führt die Bewegung des Schwenkrundtisches 12 aus. Durch den Schwenkrundtisch 12 wird die 5-Achsenbearbeitung durch zwei Drehachsen ermöglicht. Der Schwenkrundtisch wird durch das Schwenken in Richtung der Pinolenachse und in Vertikalrichtung bewegt. Durch die zweite Drehachse lässt sich der Schwenkrundtisch 12 um die eigene Achse drehen, sodass eine größtmögliche Bewegung eines Werkstückes auf dem Schwenkrundtisch 12 ermöglicht wird. Die Schwenkbewegung des Schwenkrundtisches 12 führt eine Kreisbahn aus, die durch eine Bewegung in zwei Koordinatenachsen beschrieben werden kann. Daher erreicht das Schwenken des Schwenkrundtisches 12 weitere Bewegungsfreiheiten in Längsrichtung des Maschinenbettes 1 und in Vertikalrichtung.

In einem Innenraum 19 an Innenseiten des Maschinenbettes 1 sind Späneablenkvorrrichtungen 20 zum Ablenken der bei der Werkstückbearbeitung anfallenden Späne angeordnet. Die von der Späneablenkvorrrichtungen 20 fallenden Späne werden in den Spänekanal 15 gelenkt. Durch eine (siehe Figur 3) im Spänekanal 15 angeordnete Späneschnecke 16 werden die Späne aus dem Spänekanal 15 der Werkzeugmaschine geführt. Eine weitere Darstellung der Späneschnecke ist in Figur 3 gezeigt und wird in der Beschreibung von Figur 3 näher beschrieben.

Auf einer Außenseitenfläche auf einer der Maschinenständerkörper 2a, 2b ist senkrecht zur Achse der Arbeitsspindel 25 ein Radmagazin 11 angebracht. Das Radmagazin 11 führt Werkzeuge, die durch einen Manipulator in die Arbeitsspindel 25 eingesetzt werden können. Die in der Arbeitsspindel 25 eingesetzten Werkzeuge können wiederum durch den Manipulator aus der Arbeitsspindel 25 entnommen werden und in das Radmagazin 11 eingesetzt werden. Das Radmagazin 11 ermöglicht einen schnellen Wechsel der Werkzeuge aus und in die Arbeitsspindel 25, was die Effizienz der Werkzeugmaschine erhöht.

In Figur 3 ist die Werkzeugmaschine in einer Draufsicht dargestellt, in der die Position der Pinole 9 zum Schwenkrundtisch 12 gezeigt wird. Durch die Verfahrbarkeit der Pinole 9 in allen drei Raumrichtungen durch die verschiedenen Führungsschienen 5, 6, 7a, 7b lässt sich die Pinole 9 im gesamten Bereich des Maschinenbettes 1 verfahren. Da die Arbeitsspindel 25 in der Pinolenachse ausfahrbar ist, ist die Reichweite bis zum Schwenkrundtisch 12 verlängert. Durch die verlängerte Reichweite der Arbeitsspindel 25 und durch das Schwenken des Schwenkrundtisches 12 ist eine besonders genaue Bearbeitung eines Werkstückes möglich. Durch die verlängerte Reichweite der Arbeitsspindel 25 in Richtung der Pinolenachse können besonders Breite und lange Werkstücke ohne Wechsel oder Korrektur dessen Position bearbeitet werden.

In der Mitte des Maschinenbettes 1 ist in Figur 3 die Späneschnecke 16 dargestellt, die in dem Innenraum 19 des Maschinenbettes 1 in Längsrichtung im Spänekanal 15 montiert ist. Die bei der Werkstückbearbeitungen anfallenden Späne werden durch die Späneschnecke 16 im Spänekanal 15 aus dem Maschinenbett 1 transportiert, sodass anfallende Späne, die einen großen Störfaktor bei den Bearbeitungen sind, effizient und schnell aus dem Bearbeitungsbereich entsorgt werden.

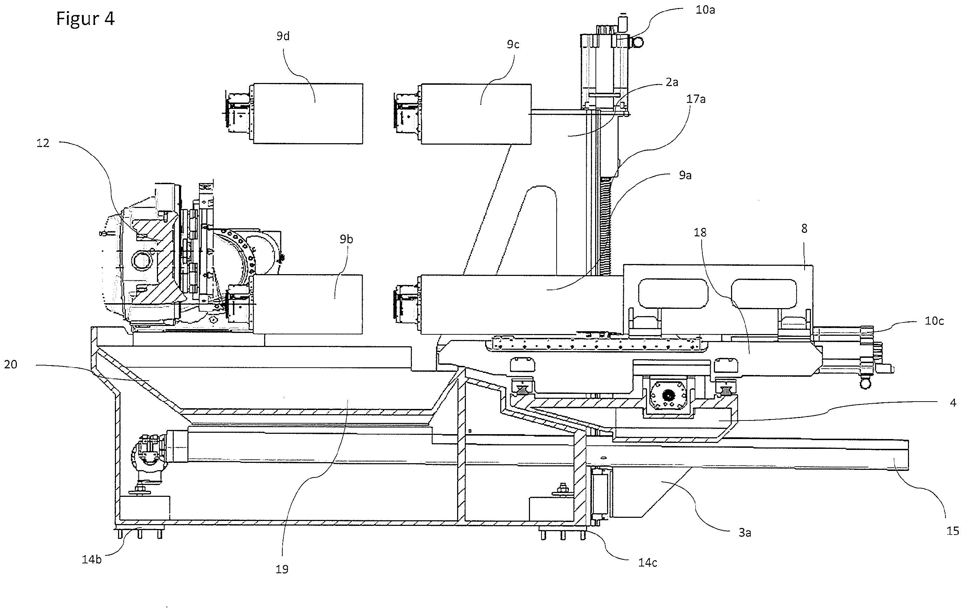

Figur 4 zeigt eine Seitenansicht der Werkzeugmaschine, in der die Positionierung der Pinole 9 zum Schwenkrundtisch 12 und der Innenraum 19 des Maschinenbettes 1 gezeigt werden. In der Ansicht ist der Schwenkrundtisch um 90° gedreht, sodass die Arbeitsspindel 25 der Pinole 9 senkrecht zum Schwenkrundtisch 12 steht. Durch die verlängerte Reichweite der Arbeitsspindel 25, die aus der zweifachen Verfahrbarkeit der Pinole 9 resultiert, wird deutlich, dass die Arbeitsspindel 25 bis zum Schwenkrundtisch 12 verfahren werden kann. Dabei wird der Aufbau der Werkzeugmaschine kompakt gehalten und erreicht eine besonders große Steifigkeit.

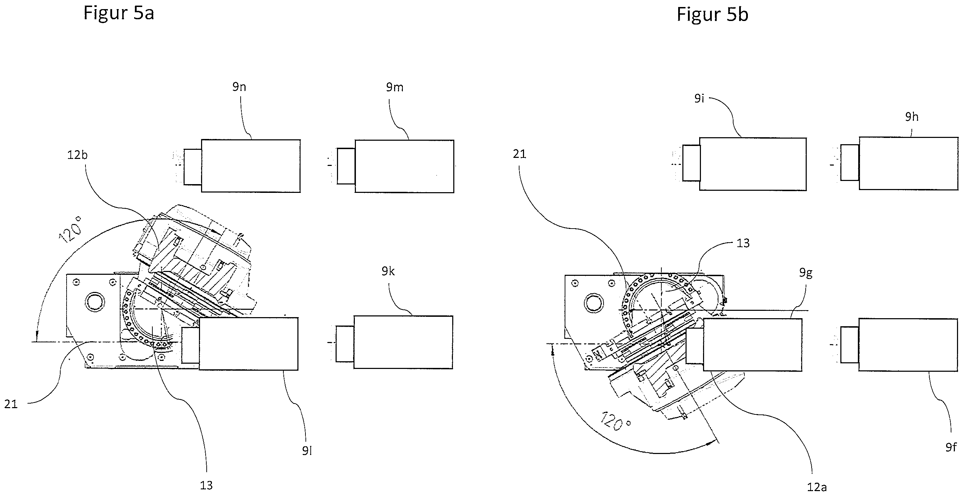

Figur 5 verdeutlicht die Bewegung des Schwenkrundtisches 12 beim Schwenken. Der Schwenkrundtisch 12 kann sowohl den Tisch in Aufrechthaltung 12a halten, als auch in Überkopfstellung 12b drehen. Durch die Schwenkarme wird der Schwenkrundtisch 12 um eine Drehachse auf einer Kreisbahn bewegt. Der Schwenkrundtisch wird um eine weitere Drehachse um die eigene Achse gedreht. Wie in Figur 5a dargestellt ist, ist die Pinole 9k, 9l, 9m, 9n in verschiedenen Höhen und in verschiedenen Weiten verfahrbar, wobei der Schwenkrundtisch 12 in Überkopfstellung 12b positioniert ist. In Figur 5b wird die Position der Pinole 9f, 9g, 9h, 9i im Vergleich zu der Position des Schwenkrundtisches 12 in Normalhaltung 12a des Schwenkrundtisches 12 dargestellt. Durch die Reichweite der Pinole 9 und der Beweglichkeit des Schwenkrundtisches 12 ist eine Vielzahl an Bearbeitungsmodi möglich, in denen Werkstücke flexibel bearbeitet werden können. Durch die Überkopfstellung 12b des Schwenkrundtisches 12 besteht die Möglichkeit anfallende Späne direkt in den Spänekanal 15 fallen zu lassen.

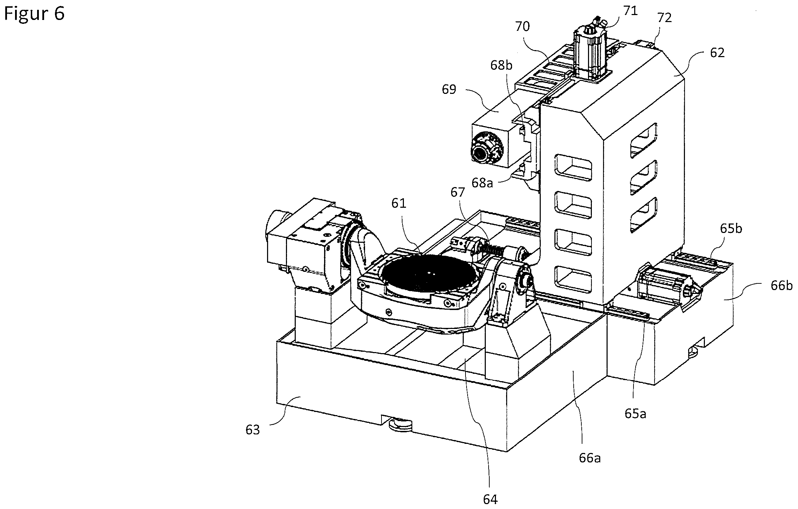

In Figur 6 ist ein erläuterndes Beispiel einer Werkzeugmaschine dargestellt, die nicht unter die Erfindung, wie gegenwärtig beansprucht, fällt und die im Vergleich zum ersten Ausführungsbeispiel einen einteiligen Maschinenständer 62 umfasst, der auf der Oberseite des Maschinenbettes 63 in einer horizontalen Richtung senkrecht zu der Pinolenachse verfahrbar ist und bei der das Pinolengehäuse 70 seitlich an dem Maschinenständer 62 mittels eines Vertikalschlittens in Vertikalrichtung verfahrbar ist.

Die Werkzeugmaschine umfasst das Maschinenbett 63, den Maschinenständer 62 und eine in einer ersten Richtung axial verfahrbare Pinole 69. Das Maschinenbett 63 ist in zwei Bereiche aufgeteilt, wobei in einem ersten Bereich 66a oberhalb des Maschinenbettes 63 ein Schwenkrundtisch 61 montiert ist. Ein erster und ein zweiter Schwenkarm des Schwenkrundtisches 61 sind jeweils so an einer ersten und zweiten Seitenwand des Maschinenbettes montiert, dass der Schwenkrundtisch mittig im ersten Bereich 66a des Maschinenbettes 63 angeordnet ist. Im Maschinenbett 63 unterhalb des Schwenkrundtisches 61 ist ein Spänesammelraum 64 zum Ansammeln der bei einer Bearbeitung eines Werkstückes anfallenden Späne ausgebildet.

Ein zweiter Bereich 66b des Maschinenbettes 63 schließt sich dem ersten Bereich 66a des Maschinenbettes 63 an einer dritten Seitenwand des ersten Bereichs 66a an. Auf einer Oberseite des zweiten Bereichs 66b des Maschinenbettes 63 verlaufen senkrecht zu der ersten Richtung in einer zweiten Richtung zwei parallel zueinander eingerichtete Führungsschienen 65a, 65b. Auf den beiden Führungsschienen 65a, 65b ist der mittels eines Motors und eines Kugelgewindetriebes 67 verfahrbare einzelne Maschinenständer 62 angeordnet. Der Maschinenständer 62 verfährt in der zweiten Richtung senkrecht zu der in der ersten Richtung axial verfahrbaren Pinole 69. Der Kugelgewindetrieb 67 ist innerhalb des zweiten Bereichs 66b des Maschinenbetts 63 in Richtung der Verfahrbarkeit des Maschinenständers 62 angeordnet.

Auf dem Maschinenständer 62 sind parallel zueinander verlaufend zwei vertikale Führungsschienen angeordnet, sodass ein Vertikalschlitten auf einer Seitenfläche des Maschinenständers 62 in Vertikalrichtung verfahrbar angeordnet ist. Auf dem Vertikalschlitten sind zwei weitere Führungsschienen 68a, 68b angeordnet, mittels derer ein seitlich an dem Maschinenständer geführtes Pinolengehäuse 70 in die erste Richtung verfahrbar angeordnet ist. Das Pinolengehäuse 70 umfasst die Pinole 69, die axial in der ersten Richtung in und aus dem Pinolengehäuse 70 verfahrbar ist.

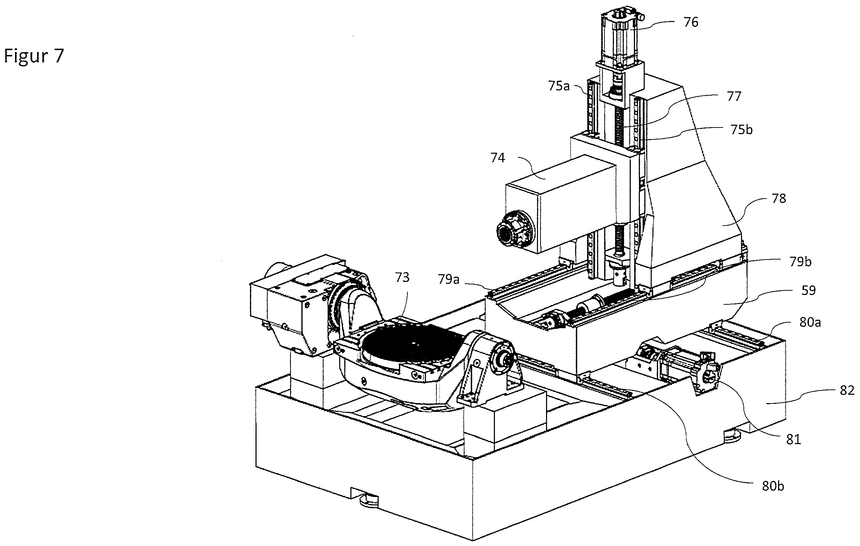

In Figur 7 ist ein weiteres erläuterndes Beispiel einer Werkzeugmaschine dargestellt, die nicht unter die Erfindung, wie gegenwärtig beansprucht, fällt. Die Werkzeugmaschine umfasst einen einteiligen Maschinenständer 78, wobei dieser im Unterschied zu dem erläuternden Beispiel aus Figur 6 einem Horizontalschlitten 59 angeordnet ist, sodass der Maschinenständer 78 auf dem Horizontalschlitten 59 auf der Oberseite des Maschinenbettes 82 in eine Richtung senkrecht zu der Pinolenachse und der Maschinenständer 78 zusätzlich auf dem Horizontalschlitten 59 in Richtung der Pinolenachse verfahrbar ist.

Die Werkzeugmaschine umfasst das Maschinenbett 82, den Maschinenständer 78 und eine in einer ersten Richtung axial verfahrbare Pinole 74. Auf der Oberseite des Maschinenbettes 82 ist in einem ersten Bereich, wie in Figur 6 gezeigt, ein Schwenkrundtisch 73 angeordnet. In einem zweiten Bereich des Maschinenbettes 82 sind in einer zweiten Richtung senkrecht zu der ersten Richtung in Horizontalrichtung zwei parallel zueinander angeordnete Führungsschienen 80a, 80b angeordnet.

Auf den Führungsschienen 80a, 80b ist ein Horizontalschlitten 59 montiert. Der Horizontalschlitten 59 wird mittels eines Motors und eines Kugelgewindetriebes in die zweite Richtung auf den Führungsschienen 80a, 80b verfahren. Auf der Oberseite des Horizontalschlittens 59 sind zwei parallel zueinander angeordnete Führungsschienen 79a, 79b in die erste Richtung orientiert montiert. Auf den beiden Führungsschienen 79a, 79b ist der Maschinenständer 78 in die erste Richtung verfahrbar. Innerhalb des Horizontalschlittens 59 ist ein Kugelgewindetrieb montiert, mittels dessen der Maschinenständer 78 motorgetrieben verfahren ist.

Auf einer Seitenfläche des Maschinenständers 78 sind in Vertikalrichtung zwei parallel zueinander angeordnete Führungsschienen 75a, 75b montiert. Auf den beiden vertikal angeordneten Führungsschienen 75a, 75b ist ein Pinolengehäuse 74 mit integriertem Vertikalschlitten in Vertikalrichtung verfahrbar. Innerhalb des Maschinenständers 78 ist ein Kugelgewindetrieb 77 eingerichtet, mittels dessen der Spindelkasten mit integriertem Vertikalschlitten durch einen auf der Oberseite des Maschinenständers 78 angeordneten Motor 76 verfahren wird.

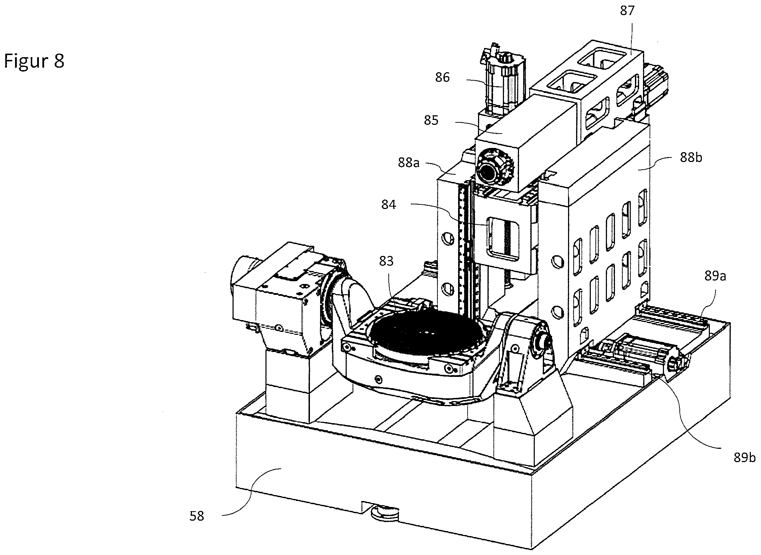

Figur 8 zeigt ein weiteres erläuterndes Beispiel einer Werkzeugmaschine, die nicht unter die Erfindung, wie gegenwärtig beansprucht, fällt und die im Vergleich zu dem ersten Ausführungsbeispiel einen beweglichen Maschinenständer 88a, 88b umfasst, der zwei Maschinenständerkörper 88a, 88b und ein zwischen den beiden Maschinenständerkörpern 88a, 88b angeordnetes Verbindungselement 84 aufweist, wobei die beiden Maschinenständerkörper 88a, 88b und das Verbindungselement 84 gemeinsam auf der Oberseite des Maschinenbettes 58 horizontal und senkrecht zu der Pinolenachse verfahrbar sind.

Die Werkzeugmaschine umfasst das Maschinenbett 58, einen Schwenkrundtisch 83 und auf der Oberseite des Maschinenbetts 58 angeordnete Führungsschienen 89a, 89b. Auf den beiden auf dem Maschinenbett angeordneten Führungsschienen 89a, 89b ist der Maschinenständer 88a, 88b in die zweite Richtung verfahrbar. Der Maschinenständer 88a, 88b ist aus einem Gussteil gefertigt, wobei das Gussteil so geformt ist, dass der Maschinenständer 88a, 88b einen ersten Maschinenständerkörper 88a und einen zweiten Maschinenständerkörper 88b umfasst, deren Breitseiten parallel zueinander orientiert und durch das Verbindungselement 84 verbunden sind. Auf der Innenseite des ersten Maschinenständerkörpers 88a und auf der Innenseite des zweiten Maschinenständerkörpers 88b sind in vertikaler Richtung jeweils zwei parallel zueinander angeordnete Führungsschienen montiert. Das Verbindungselement 84 zwischen dem ersten und zweiten Maschinenständerkörpers 88a, 88b ist zwischen den Innenflächen des ersten und zweiten Maschinenständerkörpers 88a, 88b mittels der Führungsschienen vertikal verfahrbar.

Auf der Oberseite des Verbindungselements 84 sind zwei parallel zueinander angeordnete Führungsschienen in die erste Richtung orientiert angeordnet. Auf den Führungsschienen ist ein Pinolengehäuse 87 in die erste Richtung verfahrbar montiert. Im Innern des Pinolengehäuses 87 ist eine Pinole 85 angeordnet, die neben der Verfahrbarkeit des Pinolengehäuses 87 axial in die erste Richtung aus und in das Pinolengehäuse 87 verfahrbar ausgestaltet ist.

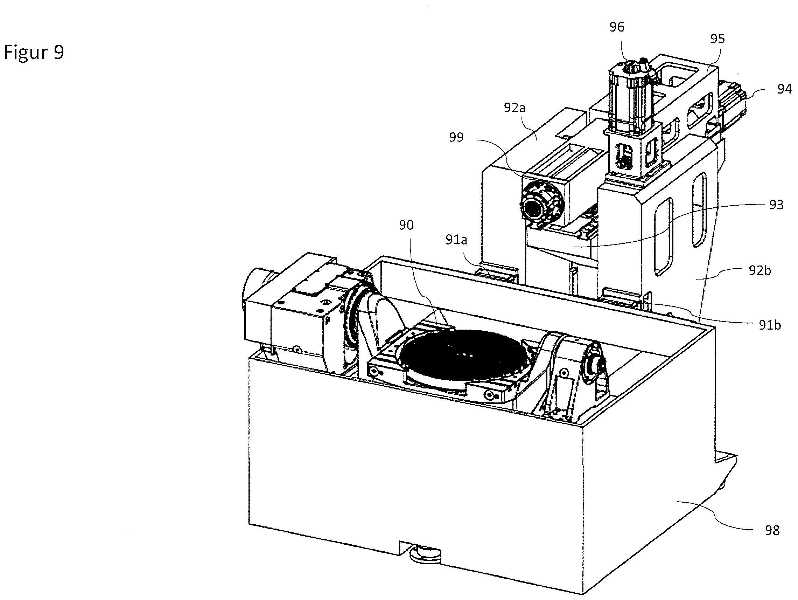

Figur 9 zeigt ein weiteres erläuterndes Beispiel einer Werkzeugmaschine, die nicht unter die Erfindung, wie gegenwärtig beansprucht, fällt, wobei im Vergleich zu dem auf der Oberseite des Maschinenbettes verfahrbaren, Maschinenständer 88a, 88b des Beispiels aus Figur 8der Maschinenständer 92a, 92b im vorliegenden Beispiel auf einer Außenseite des Maschinenbettes 98 angeordnet ist, sodass dieser auf der Außenseite des Maschinenbettes 98 horizontal und in einer Richtung senkrecht zu der Pinolenachse verfahrbar ist.

Die Werkzeugmaschine umfasst das Maschinenbett 98, den Maschinenständer 92a 92b und eine in einer ersten Richtung axial verfahrbaren Pinole 99. Das Maschinenbett 98 umfasst einen Schwenkrundtisch 90 in gleicher Ausführung wie in den Figuren 6 bis 8 dargestellt. An einer Außenseite des Maschinenbettes 98 sind zwei parallel zueinander angeordnete Führungsschienen montiert, die in einer zweiten Richtung senkrecht zu der ersten Richtung orientiert sind. Der Maschinenständer 92a, 92b ist auf der Außenseite des Maschinenbettes 98 mittels eines ersten und zweiten Führungsschuhs 91a, 91b auf den Führungsschienen in die zweite Richtung verfahrbar, wobei die beiden Führungsschuhen 91a, 91b an einem ersten Maschinenständerkörper 92a und an einem zweiten Maschinenständerkörper 92b montiert sind. Der Maschinenständer 92a, 92b ist so ausgebildet, dass dieser aus einem Gussteil gefertigt ist und den ersten Maschinenständerkörper 92a und den zweiten Maschinenständerkörper 92b umfasst. Der erste und der zweite Maschinenständerkörper 92a, 92b sind über ein Verbindungselement 93 zwischen dem ersten und zweiten Maschinenständerkörper 92a, 92b verbunden. Auf den Innenflächen der ersten und zweiten Maschinenständerkörper 92a, 92b sind in Vertikalrichtung jeweils Führungsschienen montiert, mittels derer das Verbindungselement 93 zwischen dem ersten und zweiten Maschinenständerkörper 92a, 92b in Vertikalrichtung verfahrbar ist.

Auf einer Oberseite des Verbindungselements 93 sind zwei Führungsschienen montiert, die parallel zueinander in der ersten Richtung orientiert sind. Auf den beiden Führungsschienen ist ein Pinolengehäuse 95 in die erste Richtung verfahrbar. Das Pinolengehäuse 95 umfasst die zusätzlich in dem Pinolengehäuse axial in die erste Richtung ein- und ausfahrbare Pinole 99.

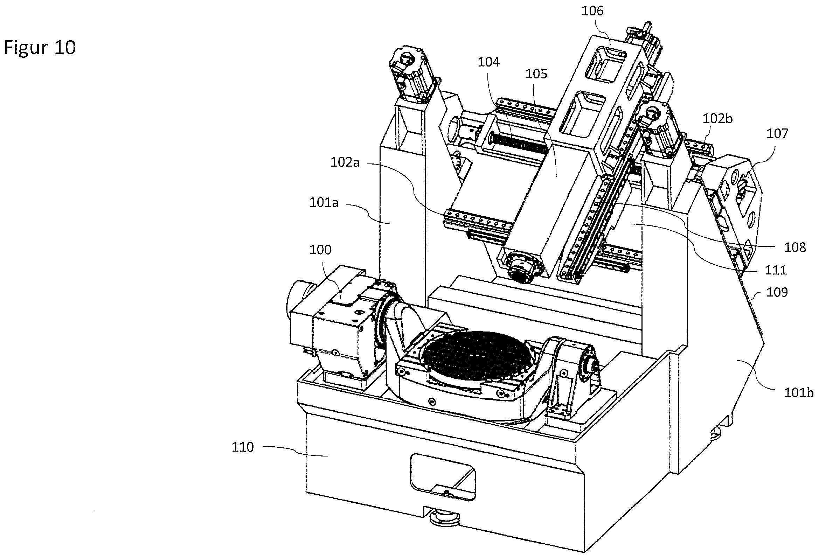

Figur 10 zeigt ein weiteres erläuterndes Beispiel Werkzeugmaschine, die nicht unter die Erfindung, wie gegenwärtig beansprucht, fällt und bei der ein mit dem ersten Ausführungsbeispiel vergleichbarer brückenartiger Aufbau des Maschinenständers realisiert ist, wobei die Brücke 111 im Unterschied zum ersten Ausführungsbeispiel zwischen zwei stationären Maschinenständerkörpern 101a, 101b in einen Winkel zu dem Maschinenbett 110 angeordnet ist, sodass die Pinole 105 ebenfalls schrägwinkelig zu dem Maschinenbett 110 orientiert ist.

Die Werkzeugmaschine umfasst das Maschinenbett 110, den Maschinenständer 101a, 101b und die in einer ersten Richtung axial verfahrbaren Pinole 108. Auf einer Oberseite des Maschinenbetts 110 ist ein Schwenkrundtisch 100 angeordnet. An einer Außenseite des Maschinenbetts 110 sind zwei Maschinenständerkörper 101a, 101b angeordnet. Die beiden Maschinenständerkörper 101a, 101b sind so eingerichtet, dass auf der Rückseite der Maschinenständerkörper 101a, 101b ein erster und zweiter Schlitten 107 schrägwinkelig zur Vertikalen auf Führungsschienen 109 verfahrbar sind. Der Winkel zwischen der Rückseite der Maschinenständerkörper 101a, 101b zu der Vertikalen beträgt etwa 45°. Der Winkel zwischen der Rückseite der Maschinenständerkörper 101a, 101b zu der Vertikalen ist jedoch nicht auf einen bestimmten Winkel beschränkt, und beträgt vorzugsweise 10° bis 80°.

Zwischen den beiden Maschinenständerkörpern 101a, 101b ist eine an dem ersten und zweiten Schlitten 109 montierte Brücke 111 angeordnet, die mittels der beiden Schlitten 109 auf der Rückseite der beiden Maschinenständerkörper 101a, 101b schräg in eine zweite Richtung verfahrbar ist.

Auf der Oberseite der Brücke 111 sind zwei in einer dritten Richtung orientierte Führungsschienen 102a, 102b parallel zueinander angeordnet, auf denen ein Schlitten 108 in die dritte Richtung verfahrbar ist. Mittels eines auf der Brücke 111 angeordneten Kugelgewindetriebs 104 und eines Motors wird die Bewegung des Schlittens 108 in die dritte Richtung ausgeführt.

Auf der Oberseite des Schlittens 108 sind zwei parallel zueinander angeordnete Führungsschienen montiert, die in die erste Richtung orientiert sind. Auf den beiden Führungsschienen ist ein Pinolengehäuse 106 in die erste Richtung verfahrbar. Das Pinolengehäuse 106 umfasst die Pinole 105, die zusätzlich axial in die erste Richtung ein- und ausfahrbar ist.

Zusammengefasst ist die Pinole 105 in die erste Richtung mittels der Ein- und Ausfahrbarkeit aus dem Pinolengehäuse 106 und mittels der Verfahrbarkeit des Pinolengehäuses 106 doppelt verfahrbar. Zudem ist die Pinole 105 mittels der Schlitten 3a, 3b, 59 in die zweite und in die dritte Richtung verfahrbar, wobei die erste, die zweite und die dritte Richtung senkrecht zueinander verlaufen. Da das Pinolengehäuse 106 mit der Pinole 105 auf der Brücke 111 verfahrbar angeordnet ist und die Brücke 111 schrägwinkelig zur Vertikalen steht, ist die Pinole 105 gegenüber dem Schwenkrundtisch 100 und dem Maschinenbett 110 ebenfalls schrägwinkelig angeordnet.

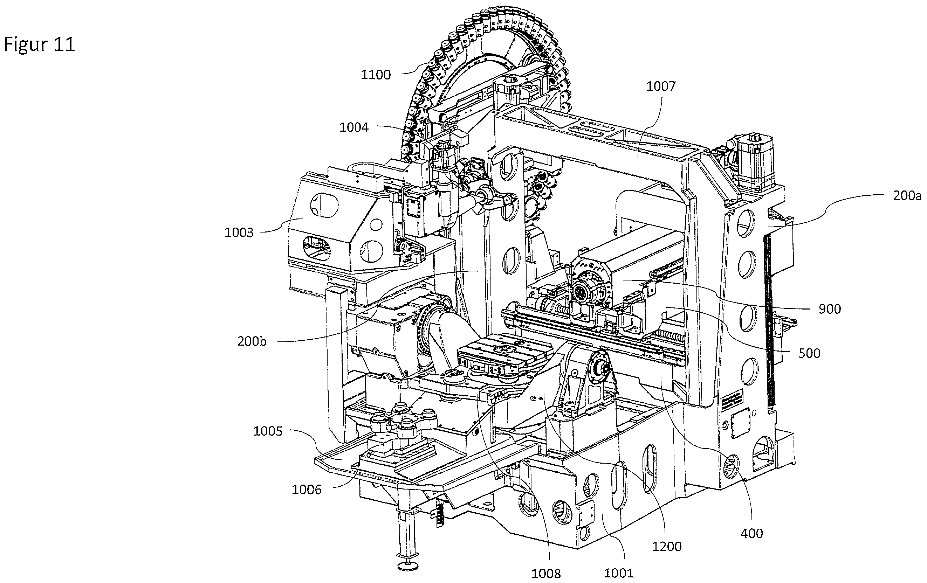

Figur 11 zeigt ein Ausführungsbeispiel einer Werkzeugmaschine, in der ein brückenartiger Aufbau des Maschinenständers wie in den Figuren 1 bis 4 realisiert ist, wobei oberhalb des Pinolengehäuses ein parallel zu der Brücke angeordnetes Verbindungselement die beiden Maschinenständerkörper verbindet. Das Pinolengehäuse ist weiterhin auf der Brücke mittels des Horizontalschlittens zwischen der Brücke und dem Verbindungselement in die zweite Richtung senkrecht zu der Pinolenachse verfahrbar.

## Patentansprüche

1. Werkzeugmaschine zur 5-Achsenbearbeitung eines Werkstückes umfassend:
ein Maschinenbett (1),
einen Maschinenständer (2), der auf der Oberseite oder seitlich an dem Maschinenbett (1) angeordnet ist und zwei Maschinenständerkörper (2a, 2b, 200a, 200b) umfasst, die über eine Brücke (4, 400) verbunden sind,
eine an dem Maschinenständer (2) in horizontaler Anordnung montierte Arbeitsspindel (25), die in einer ersten, einer zweiten und einer dritten Bewegungsrichtung verfahrbar eingerichtet ist, wobei die Arbeitsspindel (25) als in der ersten Bewegungsrichtung axial verfahrbare Pinole (9, 900) ausgebildet ist;
einen auf der Oberseite des Maschinenbettes (1) angeordneten Schwenktisch (12, 1200), dessen Schwenkachse senkrecht zur Längsachse der Arbeitsspindel (25) verläuft;
**dadurch gekennzeichnet, dass**
die Brücke (4, 400) ausgeführt ist, die Pinole (9, 900) zu tragen, derart, dass die Pinole (9, 900) auf der Brücke (4, 400) horizontal und parallel zum Maschinenbett (1) in der zweiten Bewegungsrichtung zwischen den Maschinenständerkörpern (2a, 2b, 200a, 200b) senkrecht zu der ersten Bewegungsrichtung verfahrbar angeordnet ist; und
an den beiden Maschinenständerkörpern (2a, 2b, 200a, 200b) Führungsschienen (7a, 7b) montiert sind, in denen auf beiden Seiten ein Vertikalschlitten (3a, 3b) an den Maschinenständerkörpern (2a, 2b, 200a, 200b) geführt wird und die Brücke (4, 400) durch die Vertikalschlitten (3a, 3b) in der dritten Bewegungsrichtung senkrecht zu der ersten und der zweiten Bewegungsrichtung verfahrbar ist.

2. Werkzeugmaschine nach Patentanspruch 1, **dadurch gekennzeichnet, dass** oberhalb der Pinole (9, 900) und parallel zu der Brücke (4, 400) ein Verbindungselement angeordnet ist, dass die beiden Maschinenständerkörper (2a, 2b, 200a, 200b) verbindet.

3. Werkzeugmaschine nach einem der Patentansprüche 1 oder 2, **dadurch gekennzeichnet, dass** die beiden Maschinenständerkörper (2a, 2b, 200a, 200b) und die zwischen den Maschinenständerkörper (2a, 2b, 200a, 200b) angeordnete Brücke (4, 400) dergestalt zueinander angeordnet sind, dass ein thermosymmetrischer Aufbau resultiert.

4. Werkzeugmaschine nach einem der Patentansprüche 1 bis 3, **dadurch gekennzeichnet, dass** in dem Maschinenbett (1) ein Spänesammelraum ausgebildet ist, und der Schwenktisch (12, 1200) oberhalb des Spänesammelraums angeordnet ist.

5. Werkzeugmaschine nach einem der Patentansprüche 1 bis 4, **dadurch gekennzeichnet, dass** die Werkzeugmaschine ein Radmagazin (11, 1100), dessen Achse senkrecht zur Arbeitsspindel (25) verläuft und einen Manipulator zum Wechseln von Werkzeugen an der Arbeitsspindel (25) bzw. dem Radmagazin (11, 1100) umfasst.

6. Werkzeugmaschine nach einem der Patentansprüche 1 bis 5, **dadurch gekennzeichnet, dass** das Maschinenbett (1) auf der Unterseite eine Drei-Punkt-Auflage (14a, 14b, 14c) aufweist.

## Claims

1. Machine tool for 5-axis machining of a workpiece, comprising:
a machine bed (1),
a machine stand (2) which is arranged on the upper side or laterally on the machine bed (1) and includes two stationary machine stand bodies (2a, 2b, 200a, 200b) which are connected via a bridge (4, 400),
a working spindle (25) which is mounted on the machine stand (2) in a horizontal arrangement and which is movably arranged in a first, a second, and a third direction of movement, wherein the working spindle (25) is formed as a spindle sleeve (9, 900), which is as axially movable in the first direction of movement,
a pivoting table (12, 1200) which is arranged on the upper side of the machine bed (1) and the pivot axis of which extends perpendicularly to the longitudinal axis of the working spindle (25),
**characterized in that**:
the bridge (4, 400) is configured to support the spindle sleeve (9, 900) in such a way that the spindle sleeve (9, 900) is arranged on the bridge (4, 400) horizontally and parallel to the machine bed (1) in the second direction of movement between the machine stand bodies (2a, 2b, 200a, 200b) so as to be movable perpendicularly to the first direction of movement,
guide rails (7a, 7b) are mounted on the two machine stand bodies (2a, 2b, 200a, 200b), wherein a vertical carriage (3a, 3b) is guided on the machine stand body (2a, 2b, 200a, 200b) on both sides, and wherein the bridge (4, 400) is movable by the vertical carriage (3a, 3b) in the third direction of movement perpendicular to the first and second direction of movement.

2. Machine tool according to claim 1, **characterized in that**:
a connecting element is arranged above the spindle sleeve (9, 900) and parallel to the bridge (4, 400), which connects the two machine stand bodies (2a, 2b, 200a, 200b).

3. Machine tool according to claims 1 or 2, **characterized in that**:
the two machine stand bodies (2a, 2b, 200a, 200b) and the bridge (4, 400) arranged between the machine stand bodies (2a, 2b, 200a, 200b) are arranged relative to one another such that a thermosymmetrical structure results.

4. Machine tool according to one of claims 1 to 3, **characterized in that**:
a chip collection chamber is formed in the machine bed (1), and the pivoting table (12, 1200) is arranged above the chip collection chamber.

5. Machine tool according to one of claims 1 to 4, **characterized in that**:
the machine tool includes a wheel magazine (11, 1100), the axis of which runs perpendicularly to the working spindle (25), and a manipulator for changing tools on the working spindle (25) and the wheel magazine (11, 1100), respectively.

6. Machine tool according to one of claims 1 to 5, **characterized in that**:
the machine bed (1) comprises a three-point base (14a, 14b, 14c) on the underside.

## Revendications

1. Machine-outil pour l'usinage à 5 axes d'une pièce comprenant :
un banc de machine (1),
un support de machine (2), qui est disposé sur la face supérieure ou latéralement sur le banc de machine (1) et deux corps de support de machine (2a, 2b, 200a, 200b), qui sont reliés par l'intermédiaire d'un pont (4, 400),
une broche de travail (25) montée sur le support de machine (2) dans la disposition horizontale, qui est conçue de manière à pouvoir se déplacer dans une première, une deuxième et une troisième direction de mouvement, dans laquelle la broche de travail (25) est réalisée sous la forme d'un fourreau (9, 900) déplaçable axialement dans la première direction de mouvement ;
une table pivotante (12, 1200) disposée sur la face supérieure du banc de machine (1), dont l'axe de pivotement s'étend perpendiculairement à l'axe longitudinal de la broche de travail (25) ;
**caractérisée en ce que**
le pont (4, 400) est conçu pour porter le fourreau (9, 900), de telle sorte que le fourreau (9, 900) est disposé de manière à pouvoir se déplacer sur le pont (4, 400) horizontalement et parallèlement au banc de machine (1) dans la deuxième direction de mouvement entre les corps de support de machine (2a, 2b, 200a, 200b) perpendiculairement à la première direction de mouvement ; et
des rails de guidage (7a, 7b), dans lesquels un chariot vertical (3a, 3b) est guidé sur les corps de support de machine (2a, 2b, 200a, 200b) sur les deux côtés, sont montés sur les deux corps de support de machine (2a, 2b, 200a, 200b) et le pont (4, 400) peut être déplacé par les chariots verticaux (3a, 3b) dans la troisième direction de mouvement perpendiculairement à la première et la deuxième direction de mouvement.

2. Machine-outil selon la revendication 1, **caractérisée en ce qu'**un élément de liaison est disposé au-dessus du fourreau (9, 900) et parallèlement au pont (4, 400), qui relie les deux corps de support de machine (2a, 2b, 200a, 200b).

3. Machine-outil selon l'une quelconque des revendications 1 ou 2, **caractérisée en ce que** les deux corps de support de machine (2a, 2b, 200a, 200b) et le pont (4, 400) disposé entre les corps de support de machine (2a, 2b, 200a, 200b) sont disposés les uns par rapport aux autres de telle sorte qu'il en résulte une structure thermosymétrique.

4. Machine-outil selon l'une quelconque des revendications 1 à 3, **caractérisée en ce qu'**un espace collecteur de copeaux est réalisé dans le banc de machine (1), et la table pivotante (12, 1200) est disposée au-dessus de l'espace collecteur de copeaux.

5. Machine-outil selon l'une quelconque des revendications 1 à 4, **caractérisée en ce que** la machine-outil comprend un magasin de roue (11, 1100), dont l'axe s'étend perpendiculairement à la broche de travail (25), et un manipulateur pour le remplacement d'outils sur la broche de travail (25) ou le magasin de roue (11, 1100).

6. Machine-outil selon l'une quelconque des revendications 1 à 5, **caractérisée en ce que** le banc de machine (1) présente sur la face inférieure un appui à trois points (14a, 14b, 14c).
